# EUROPEAN PATENT SPECIFICATION

(11) **EP 3 836 475 B1**
(45) Date of publication and mention of the grant of the patent: **06.07.2022**
(21) Application number: 18933654.8
(22) Date of filing: 10.09.2018
(51) Int. Cl.: H04W 52/50, H04W 52/14, H04W 52/36, H04W 74/08

(54) **METHOD FOR CONTROLLING POWER RAMP COUNTER, AND TERMINAL DEVICE**
VERFAHREN ZUR STEUERUNG EINES LEISTUNGSHOCHFAHRZÄHLERS UND ENDGERÄT
PROCÉDÉ DE COMMANDE DE COMPTEUR DE RAMPE DE PUISSANCE ET DISPOSITIF TERMINAL

(43) Date of publication of application: 16.06.2021
(73) Proprietor: GUANGDONG OPPO MOBILE TELECOMMUNICATIONS CORP., LTD., Dongguan Guangdong 523860 (CN)
(72) Inventor: SHI, Cong, Guangdong 523860 (CN); CHEN, Wenhong, Guangdong 523860 (CN); SHI, Zhihua, Guangdong 523860 (CN); XU, Weijie, Guangdong 523860 (CN)
(74) Representative: Novagraaf Technologies
(86) International application number: PCT/CN2018/104867
(87) International publication number: WO 2020/051739

(56) References cited:
- CN-A- 104 854 949
- CN-A- 106 612 168
- FUJITSU: "CR to power ramping", 3GPP DRAFT; 38321_CR0399_(REL_15)_R2-1813018 CR TO POWER RAMPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Gothenburg, Sweden; 20180820 - 20180824 26 August 2018 (2018-08-26), XP051522592, Retrieved from the Internet: URL:http://www.3gpp.org/ftp/tsg%5Fran/WG2% 5FRL2/TSGR2%5F103/Docs/R2%2D1813018%2Ezip [retrieved on 2018-08-26]
- FUJITSU [TO BE TSG RAN WG2]: "[DRAFT] LS on Preamble Power Ramping Counter", 3GPP DRAFT; R2-1813017 LS TO RAN1 AND RAN4 ON PREAMBLE POWER RAMPING COUNTER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Gothenburg, Sweden; 20180820 - 20180824 26 August 2018 (2018-08-26), XP051522591, Retrieved from the Internet: URL:http://www.3gpp.org/ftp/tsg%5Fran/WG2% 5FRL2/TSGR2%5F103/Docs/R2%2D1813017%2Ezip [retrieved on 2018-08-26]
- SAMSUNG: "Miscellaneous corrections", 3GPP DRAFT; 38321_CR0193R4_(REL-15)_R2-1813488 MISCELLANEOUS CORRECTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Gothenburg, Sweden; 20180820 - 20180824 9 September 2018 (2018-09-09), XP051551285, Retrieved from the Internet: URL:http://www.3gpp.org/ftp/Meetings%5F3GP P%5FSYNC/RAN/Docs/RP%2D181942%2Ezip [retrieved on 2018-09-09]

## Description

### TECHNICAL FIELD

Embodiments of the application relate to the field of communications, and more specifically, to a method and a terminal device for controlling a power ramping counter.

### BACKGROUND

Typically, for handover (HO) and a random access channel (RACH) triggered by beam failure recovery (BFR), RACH resources can be configured by the network side for user equipment (UE), thereby enabling the UE to initiate RACH.

Taking the BFR-triggered RACH as an example, when a terminal device selects a RACH resource, it needs to first determine measurement result of a synchronization signal block (SSB) or a channel state information reference signal (CSI-RS). For example, it is determined whether a reference signal receiving power (RSRP) satisfies a corresponding threshold. If the threshold is met, the terminal device selects a preamble from preambles corresponding to the SSB or CSI-RS to transmit message 1 (Msgl), and the RACH at this time is contention free random access (CFRA). If there is no SSB or CSI-RS that meets the threshold, the terminal device randomly selects an SSB and selects a preamble from preambles corresponding to this SSB to transmit Msg1, and the RACH at this time is contention-based random access (CBRA).

However, in this case, how to effectively control the power of the terminal device to transmit Msg1 is a technical problem that needs to be solved urgently in related art. FUJITSU:"CR to power ramping" 3GPP DRAFT; 38321_CR0399_(REL_15)_R2-1813018 CR TO POWER RAMPING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANC, vol. RAN WG2, no. Gothenburg, Sweden; 20180820-20180824 26 August 2018 (2018-08-26), XP051522592 relates to the change of cases in which the preamble power ramping counter is incremented.

### SUMMARY

The invention is defined by the appended independent claims. Dependent claims constitute embodiments of the invention. The method and terminal device as claimed can effectively control a power of the terminal device for transmitting Msg 1.

Based on the above technical solution, the terminal device according to the embodiments of the application can adjust the power for transmitting Msg1 during the current random access on the basis of the second reference signal limited in the previous random access, thereby improving the efficiency for the terminal device to re-initiate the random access.

### BRIEF DESCRIPTION OF THE DRAWINGS

FIG. 1 illustrates an example of an application scenario of the disclosure.
FIG. 2 is a flowchart illustrating a contention-based random access process according to an embodiment of the disclosure.
FIG. 3 is a flowchart illustrating a contention free random access process according to an embodiment of the disclosure.
FIG. 4 is a flowchart illustrating a method for controlling a power ramping counter according to an embodiment of the disclosure.
FIG. 5 is a block diagram illustrating a terminal device according to an embodiment of the disclosure.
FIG. 6 is a block diagram illustrating another terminal device according to an embodiment of the disclosure.
FIG. 7 is a block diagram illustrating a chip according to an embodiment of disclosure.

### DETAILED DESCRIPTION

The technical solution according to the embodiments of the application will be described below with reference to the drawings in some embodiments of the application. Obviously, the described embodiments are part of the embodiments of the application, but not all of the embodiments. Based on the embodiments in the application, all other embodiments acquired by a person of ordinary skill in the art without creative efforts shall fall within the protection scope of the application.

The technical solutions according to the embodiments of the application can be applied to various communication systems, for example, Global System of Mobile communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long-Term Evolution (LTE-A) system, New Radio (NR) system, NR system evolution system, LTE-based access to unlicensed spectrum (LTE-U) system, NR-based access to unlicensed spectrum (NR-U) system, Universal Mobile Telecommunication System (UMTS), Worldwide Interoperability for Microwave Access (WiMAX) communication system, wireless local area networks (WLAN), wireless fidelity (WiFi), next-generation communication system or other communication systems.

Generally speaking, a traditional communication system supports a limited number of connections and is easy to implement. However, with the development of communication technology, the mobile communication system will not only support traditional communications, but also support device-to-device (D2D) communication, machine-to-machine (M2M) communication, machine-type communication (MTC), vehicle-to-vehicle (V2V) communication, and the like. Embodiments of the application can also be applied to these communications systems.

Optionally, the communication system in the embodiments of the application may be applied to a carrier aggregation (CA) scenario, a dual connectivity (DC) scenario, or a standalone (SA) network deployment scenario.

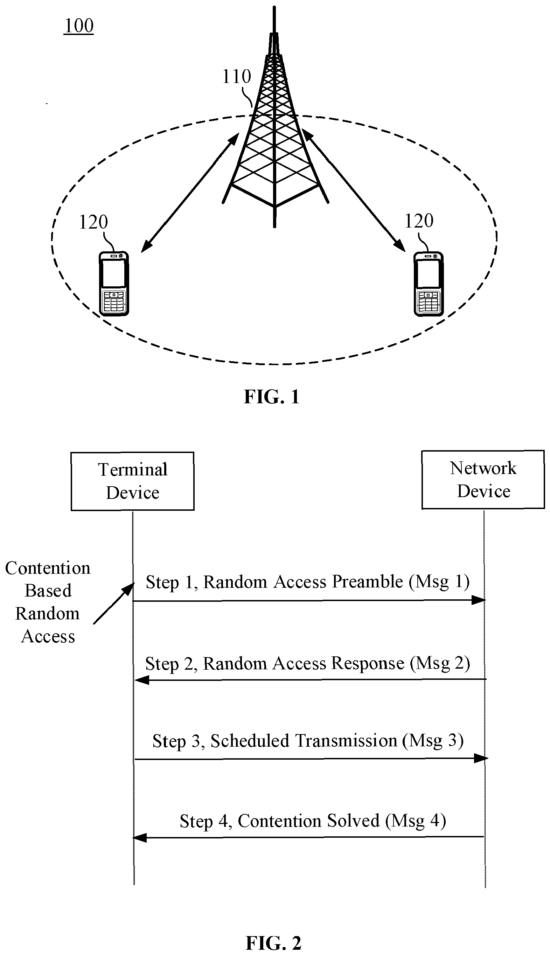

Exemplarily, the communication system 100 applied in the embodiments of the application is shown in FIG. 1. The wireless communication system 100 may include a network device 110. The network device 110 may be a device that communicates with a terminal device. The network device 110 may provide communication coverage for a specific geographic area, and may communicate with terminal devices located within the coverage area. Optionally, the network device 100 may be a BTS (Base Transceiver Station) in the GSM system or CDMA system, or a NB (NodeB) in the WCDMA system, or an eNB or eNodeB (Evolutional NodeB) in the LTE system, or a network-side device in the NR system, or a wireless controller in a CRAN (Cloud Radio Access Network). Alternatively, the network device may be a relay station, an access point, vehicle-mounted equipment, wearable equipment, network-side equipment in the next generation network, or network equipment in the future-evolved PLMN (Public Land Mobile Network).

The wireless communication system 100 further includes at least one terminal device 120 located within a coverage area of the network device 110. The terminal device 120 may be mobile or fixed. Optionally, the terminal device 120 may refer to an access terminal, user equipment (UE), user unit, user station, mobile station, mobile site, remote station, remote terminal, mobile device, user terminal, terminal, wireless communication device, user agent, or user device. The access terminal can be a cellular phone, a cordless phone, a session initiation protocol (SIP) phone, a wireless local loop (WLL) station, a personal digital assistant (PDA), a handheld device or a computing device having wireless communication function, or other processing devices, in-vehicle devices, wearable devices connected to a wireless modem, or terminal devices in future 5G network or future-evolved PLMN. In some embodiments, optionally, terminal devices 120 may also perform D2D communication.

Specifically, the network device 110 may provide services for a cell, and the terminal device 120 communicates with the network device 110 through a transmission resource (for example, a frequency domain resource or a spectrum resource) used by the cell, and the cell may correspond to the network device 110 (for example, a base station). The cell may belong to a macro base station or a base station corresponding to a small cell). The small cell herein may include: a metro cell, a micro cell, a pico cell, a femto cell and the like. These small cells have the characteristics of small coverage and low transmission power, and are suitable for providing high-speed data transmission services.

FIG. 1 exemplarily shows one network device and two terminal devices. Optionally, the wireless communication system 100 may include multiple network devices and the coverage range of each network device may include other numbers of terminal devices. Embodiments of the application are not limited thereto.

Optionally, the wireless communication system 100 may further include other network entities such as a network controller, a mobility management entity, and the like. Embodiments of the application are not limited thereto.

It should be understood that the device having a communication function in the network/system according to the embodiments of the application may be referred to as a communication device. Taking the communication system 100 shown in FIG. 1 as an example, the communication device may include a network device 110 and a terminal device 120 having a communication function, and the network device 110 and the terminal device 120 may be specific devices described above, and are not described herein again. The communication device may further include other devices in the communication system 100, such as other network entities including, for example, a network controller, a mobile management entity, and the like. Embodiments of the application are not limited thereto.

After a cell search process, the terminal device has achieved downlink synchronization with the cell, so that the terminal device can receive downlink data. However, the terminal device can only perform uplink transmission when it obtains uplink synchronization with the cell. The terminal device can establish a connection with the cell and obtain uplink synchronization through a random access procedure (RAR). In other words, through random access, the terminal device can obtain uplink synchronization, and acquire a unique identifier assigned by the network device, that is, a cell radio network temporary identity (C-RNTI). Therefore, random access can be applied not only in the initial access, but also in the case where the user's uplink synchronization is lost.

Optionally, the random access procedure in the embodiments of the application may be generally triggered by one of the following types of trigger events:
(1) Initial access.
(2) Handover.
(3) RRC connection re-establishment.
(4) In the RRC connection state, when the downlink data arrives, the uplink is in an "unsynchronized" state.
   At this time, after the downlink data arrives, the terminal device needs to reply with an acknowledgement (ACK) or a negative acknowledgement (NACK).
(5) In the RRC connection state, when the uplink data arrives, the uplink is in an "unsynchronized" state.
(6) In the RRC connection state, no physical uplink control channel (PUCCH) resource is available for scheduling request (SR) transmission. At this time, the terminal device that is already in the uplink synchronization state may be allowed to use a random access channel (RACH) to replace the role of the SR.
(7) The terminal device transitions from the RRC inactive state (RRC INACTIVE) to the active state (RRC ACTIVE).
(8) The terminal device requests other system information (OSI).
(9) Beam failure recovery of the terminal device.

The process of random access mainly has two forms, one is contention based random access process (contention based RACH), which includes 4 steps; the other is contention free random access process (contention free RACH), which includes 2 steps.

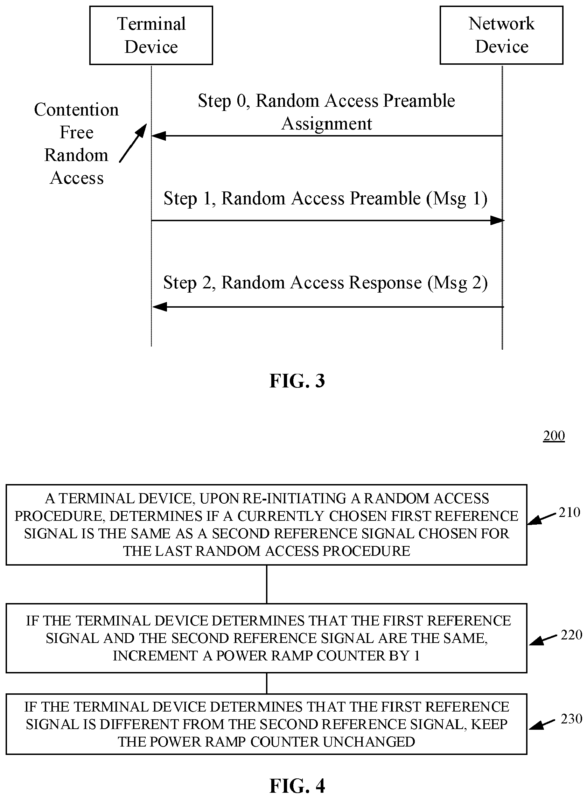

In order to facilitate understanding, the random access process will be briefly described below with reference to FIG. 2 and FIG. 3.

FIG. 2 is a flow interaction diagram of a contention-based random access process.

As shown in FIG. 2, the random access process may include the following four steps.

Step 1, Msg 1.

The terminal device sends Msg 1 to the base station to notify the network device that the terminal device initiates a random access request. The Msg1 carries a random access preamble (RAP), which is also referred to as a random access preamble sequence, a preamble sequence, or a preamble. At the same time, Msg 1 can also be used for the network device to estimate a transmission delay between it and the terminal device, which can be further used for calibrating the uplink time.

Specifically, the terminal device selects a preamble index and a PRACH resource for sending the preamble. Then, the terminal device transmits the preamble on the PRACH. In some embodiments, the network device notifies, by broadcasting a system information block (SIB), for example, SIB2, all terminal devices which time-frequency resources are allowed to transmit the preamble.

Step 2, Msg 2.

After receiving the Msg1 sent by the terminal device, the network device sends the Msg 2, that is, a random access response (RAR) message to the terminal device. The Msg 2 may carry, for example, a time advance (TA), an uplink authorization instruction such as configuration of uplink resources, and a temporary cell-radio network temporary identity (TC-RNTI).

The terminal device monitors a physical downlink control channel (PDCCH) within a random access response window (RAR window) to receive the RAR message returned by the network device. The RAR message can be descrambled using a corresponding random access radio network temporary identifier (RA-RNTI).

If the terminal device does not receive the RAR message returned by the network device within the RAR window, the random access process is considered as failure.

If the terminal device successfully receives an RAR message, and a preamble index carried in the RAR message is the same as the preamble index sent by the terminal device through Msg 1, it is considered that the RAR was successfully received. Then the terminal device can stop monitoring within the RAR window.

In some embodiments, Msg 2 may include RAR messages corresponding to multiple terminal devices, and each RAR message respectively corresponding to a terminal device may include a random access preamble identity (RAPID) used by the terminal device, information on resources used for transmitting Msg 3, TA adjustment information, TC-RNTI, and the like.

Step 3, Msg 3.

After receiving the RAR message, the terminal device determines whether the RAR is its own RAR message. For example, the terminal device can perform the determination by using the preamble identity. After determining that it is its own RAR message, the terminal device generates Msg 3 at the RRC layer, and sends Msg 3 to the network device, in which identification information of the terminal device and the like need to be carried.

Specifically, for different random access triggering events, Msg 3 in step 3 of the 4-step random access process may include different contents for scheduled transmission.

For example, for the initial access scenario, Msg 3 may include an RRC connection request generated by the RRC layer, which carries at least non-access stratum (NAS) identification information of the terminal device, and may also carry, for example, a serving-temporary mobile subscriber identity (S-TMSI) of the terminal device or a random number.

As another example, for the connection re-establishment scenario, Msg 3 may include an RRC connection re-establishment request generated by the RRC layer without carrying any NAS message. In addition, it may also carry, for example, a cell radio network temporary identifier (C-RNTI) and protocol control information (PCI).

As another example, for the handover scenario, Msg 3 may include an RRC handover confirm message generated by the RRC layer and the C-RNTI of the terminal device, and may also carry, for example, a buffer status report (BSR). For other trigger events such as uplink/downlink data arrival scenarios, Msg3 may need to include at least the C-RNTI of the terminal device.

Step 4. Msg 4.

The network device sends Msg 4 to the terminal device, and the terminal device correctly receives Msg 4 to complete the contention resolution. For example, during the RRC connection establishment process, Msg 4 may carry an RRC connection establishment message.

Since the terminal device in step 3 will carry its own unique identifier in Msg 3, such as C-RNTI or identification information from the core network (e.g., S-TMSI or a random number), the network device will specify the terminal device that wins the contention by carrying a unique identifier of the terminal device in Msg 4. The other terminal devices that do not win the contention will re-initiate random access.

FIG. 3 is a flow interaction diagram of a contention free random access process.

As shown in FIG. 3, the random access process may include the first two steps in FIG. 2 (i.e., step 1 and step 2 in FIG. 2).

In step 0, the network device sends a random access (RA) preamble assignment message to the terminal device.

Step 1, Msg 1.

The terminal device sends Msg 1 to the base station to inform the network device that the terminal device has initiated a random access request, and the Msg 1 carries a random access preamble.

Step 2, Msg 2.

After receiving the Msg 1 sent by the terminal device, the network device sends the Msg 2, that is, an RAR message, to the terminal device. The Msg 2 may carry information such as TA information, uplink authorization instructions such as uplink resource configuration, and TC-RNTI.

If the terminal device does not receive the RAR message returned by the network device within the RAR window, the random access process is considered as failure. If the terminal device successfully receives an RAR message, and a preamble index carried in the RAR message is the same as the preamble index sent by the terminal device through Msg 1, it is considered that the RAR is successfully received, then the terminal device can stop monitoring the RAR message at this time.

For Msg 1 and Msg 2 in the contention free random access process, foregoing description of Msg 1 and Msg 2 in the contention-based random access process can be referred to. Details thereof are to be omitted here for brevity.

It should be noted that when terminal devices need to initiate contention based random access on a licensed bank, since multiple terminal devices may be configured with a common PRACH resource, different terminal devices may compete for resources on the same PRACH resources.

When a resource conflict occurs, for example, when multiple terminal devices choose the same PRACH occasion, the network device may carry a backoff indicator (BI) in the RAR message of Msg 2. A terminal device that has experienced the resource conflict can generate a random number based on the backoff indicator, so that when the next PRACH resource arrives, it will delay according to the random number, thereby delaying a corresponding time to send Msg 1, thereby reducing a probability of the resource conflict to a certain extent.

Optionally, in some embodiments of the application, for RACH triggered by HO and BFR, the network may configure a dedicated RACH resource for the user, so that the UE may choose to perform CF-RACH.

Taking RACH triggered by beam failure recovery (BFR) as an example, when a terminal device selects a RACH resource, it needs to first determine a measurement result of a synchronization signal block (SSB) or a channel state information reference signal (CSI-RS). For example, it is determined whether the reference signal receiving power (RSRP) satisfies a corresponding threshold.

If the threshold is met, the terminal device selects a preamble from preambles corresponding to the SSB or CSI-RS to transmit message 1 (Msg 1), and the RACH at this time is contention free random access (CFRA).

If there is no SSB or CSI-RS that meets the threshold, the terminal device randomly selects an SSB, and selects a preamble from preambles corresponding to the SSB to send Msg 1. At this time, the RACH is contention based random access (CBRA).

However, in this case, how to effectively control a power of the terminal device to transmit the Msg 1 is a technical problem that needs to be solved urgently in the art.

FIG. 4 is a schematic flowchart illustrating a method for controlling a power ramping counter by a terminal device according to an embodiment of the application. The method 200 shown in FIG. 4 may be performed by the terminal device as shown in FIG. 1.

As shown in FIG. 4, the method 200 may include following steps.

In 210, the terminal device determines, when re-initiating a random access, whether a first reference signal currently selected is the same as a second reference signal selected in a previous random access.

In 220, the terminal device increments, when determining that the first reference signal is the same as the second reference signal, the power ramping counter by 1.

In 230, the terminal device keeps, when determining that the first reference signal is different from the second reference signal, the power ramping counter unchanged.

For example, the terminal device may determine whether to increase the value of the power climb counter by 1 according to whether the first reference signal corresponding to a currently selected preamble is the same as the second reference signal corresponding to a preamble sent in the previous RACH. In other words, the terminal device may determine whether to keep the value of the power ramping counter unchanged according to whether the first reference signal corresponding to the currently selected preamble is the same as the second reference signal corresponding to the preamble sent in the previous RACH.

According to some embodiments of the application, the terminal device can control the value of the power ramping counter based on the second reference signal limited in the previous random access, thereby adjusting the power for transmitting Msg1 in the current random access and, further, improving efficiency of the terminal device to re-initiate random access.

It should be understood that the power ramping counter can be used for controlling the power of the terminal device to transmit Msg 1. In other words, the larger the value of the power ramping counter, the shorter the random access process, but the greater the possibility of wasting power. Otherwise, the smaller the value of the power ramping counter, the longer the random access process, but the power will be saved. Therefore, the terminal device may balance the value of the power ramping counter to effectively transmit Msg1.

Optionally, in some embodiments of the application, the reference signal is an SSB, or the reference signal is a CSI-RS.

It should be understood that, in some embodiments of the application, the reference signal is a CSI-RS or the reference signal is an SSB, which are merely examples, and the embodiments of the application are not limited thereto. For example, in other alternative embodiments, the reference signal may also be an uplink demodulation reference signal (DMRS), a sounding reference signal (SRS), a phase tracking reference signal (PT-RS), or the like.

Optionally, in some embodiments of the application, before the determining whether the first reference signal currently selected is the same as the second reference signal selected in the previous random access, the terminal device receives configuration information sent by the network device, and the configuration information includes: a correspondence between preambles and reference signals, and a correspondence between random access time-frequency resources and reference signals.

The network device can configure the correspondence between preambles and reference signals for the terminal device, so that the terminal device can control the power ramping counter according to whether the reference signal selected in the current random access is changed relative to the reference signal selected in the previous random access.

In other words, the network device can configure the correspondence between random access time-frequency resources and reference signals for the terminal device, so that the terminal device can control the power ramping counter according to whether the reference signal corresponding to the currently selected random access time-frequency resource is changed relative to the reference signal corresponding to random access time-frequency resource in the previous RACH.

In other words, the correspondence between the preambles and the reference signals, and the correspondence between the random access time-frequency resources and the reference signals can be configured by the network side.

For example, the network device can configure an association relationship between SSBs and preambles for the terminal device, or configure an association relationship between CSI-RSs and preambles for the terminal device. The network device can configure an association relationship between SSBs and random access time-frequency resources for the terminal device, or configure an association between the CSI-RSs and the random access time-frequency resources for the terminal device.

The following describes in detail implementation manners in which the terminal device determines whether the first reference signal is the same as the second reference signal.

Optionally, in some embodiments of the application, the first reference signal is a first SSB, and the second reference signal is a second SSB.

Optionally, in some embodiments of the application, when the terminal device determines that an index of the first SSB and an index of the second SSB are the same, it determines that the first reference signal and the second reference signal are the same.

Specifically, when determining that the SSB selected in the current random access has changed in relative the SSB selected in the previous random access, the terminal device controls the power ramping counter to increase by one. When the terminal device determines that the SSB selected in the current random access is different from the SSB selected in the previous random access, the terminal device keeps the power ramping counter unchanged.

Optionally, in some embodiments of the application, the terminal device may select a preamble based on the selected reference signal, and then perform random access based on the selected preamble.

Optionally, in some embodiments of the application, the first reference signal is a first CSI-RS, and the second reference signal is a second CSI-RS.

The terminal device in the embodiments of the application takes the channel status into consideration, and thus can well balance the power of the terminal device for transmitting Msg 1. In other words, the terminal device can not only control the value of the power ramping counter by determining whether the currently selected SSB is changed in relative to the SSB selected in the previous RACH, but also control the value of the power ramping counter by determining whether the currently selected CSI-RS is changed in relative to the CSI-RS selected in the previous RACH, thereby effectively balancing the power of the terminal device for transmitting Msg 1.

Optionally, in some embodiments of the application, when the terminal device determines that an index of the first CSI-RS and an index of the second CSI-RS are the same, it determines that the first reference signal and the second reference signal are the same.

Optionally, in some embodiments of the application, when the terminal device determines that the indexes of the first CSI-RS and the second CSI-RS are different, and an index of reference signal indicated by indication information in quasi-co-located QCL information of the first CSI-RS is the same as an index of reference signal indicated by indication information in quasi-co-located QCL information of the second CSI-RS, it determines that the first reference signal and the second reference signals are the same.

It should be understood that the configuration manner of the CSI-RS in the embodiments of the application may be an existing configuration manner. For example, the configuration of the CSI-RS may be implemented as follows.

Specifically, the configuration parameters of the CSI-RS may include quasi-co-location information of a periodic CSI-RS (QCL-InfoPeriodicCSI-RS), and the QCL-InfoPeriodicCSI-RS may be used for indicating a TCI-state ID, which is used for identifying a TCI-state configured in configuration information (Config) of PDSCH. Optionally, the TCI-state configuration may include a QCL information (info), which may include a piece of indication information used for indicating a reference signal, for example, a CSI-RS ID or an SSB ID.

Optionally, in some embodiments of the application, the first reference signal is a third SSB, and the second reference signal is a third CSI-RS.

Optionally, in some embodiments of the application, when the terminal device determines that an index of the third SSB and an index of the second CSI-RS are different, and the index of the third SSB is the same as an index of reference signal indicated by indication information in quasi-co-location QCL information of the third CSI-RS, it determines that the first reference signal and the second reference signal are the same.

Optionally, in some embodiments of the application, the first reference signal is a fourth CSI-RS, and the second reference signal is a fourth SSB.

Optionally, in some embodiments of the application, when the terminal device determines that an index of the fourth SSB and an index of the second CSI-RS are different, and the fourth SSB is the same as an index of reference signal indicated by indication information in quasi-co-location QCL information of the fourth CSI-RS, it determines that the first reference signal and the second reference signal are the same.

Some embodiments of the application have been described in detail above with reference to the accompanying drawings. However, the application is not limited to the specific details in the foregoing embodiments. Within the scope of the technical concept of the application, various simple modifications can be made to the technical solution of the application. These simple variations fall within the protection scope of this application.

For example, the various specific technical features described in the above specific implementations can be combined in any suitable manner if there is no contradiction. In order to avoid unnecessary repetition, this application does not separately provide explanation of any possible combinations.

For another example, various embodiments of the application can also be arbitrarily combined, as long as it does not violate the idea of the application, and it should also be regarded as the content disclosed in the application.

It should be understood that, in the various method embodiments of the application, the size of the sequence numbers of the above processes does not mean the order of execution. The execution order of each process should be determined by its function and internal logic, and should not constitute any limitation on the implementation process of embodiments of the application.

For example, it is assumed that the first reference signal is a first CSI-RS and the second reference signal is a second CSI-RS. Optionally, in some embodiments of the application, when the terminal device determines an index of the first CSI-RS is the same as an index of reference signal indicated by indication information in quasi co-location QCL information of the second CSI-RS, the terminal device determines that the first reference signal and the second reference signal are the same.

As another example, it is assumed that the first reference signal is a fourth CSI-RS and the second reference signal is a fourth SSB. When the terminal device determines that an index of the fourth SSB and an index of the second CSI-RS are the same, it determines that the first reference signal and the second reference signal are the same.

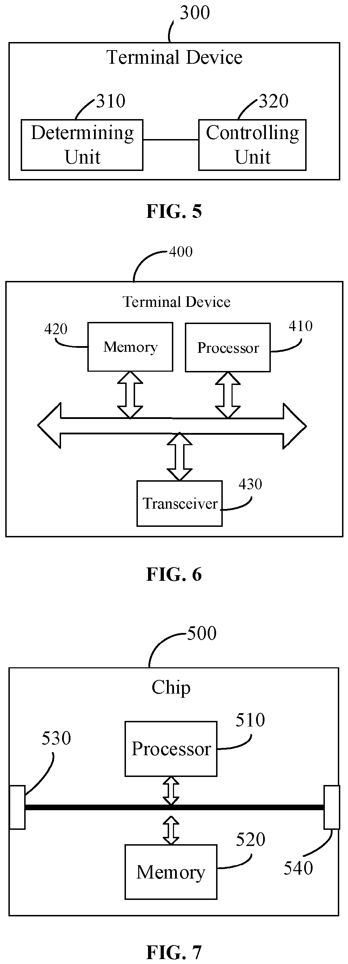

The method embodiments of the application are described in detail above with reference to FIG. 4, and the device embodiments of the application are described in detail below with reference to FIG. 5 and FIG. 6.

FIG. 5 is a block diagram of a terminal device 300 according to an embodiment of the application.

Specifically, as shown in FIG. 5, the terminal device 300 may include:
a determining unit 310, configured to determine, upon re-initiating a random access, whether a first reference signal currently selected is the same as a second reference signal selected in a previous random access; and
a controlling unit 320, configured to:
increment, upon determining that the first reference signal is the same as the second reference signal, the power ramping counter by one; or keep, upon determining that the first reference signal is different from the second reference signal, the power ramping counter unchanged.

Optionally, in some embodiments of the application, the terminal device further includes:
a transceiving unit, wherein before the determining unit 310 determines whether the first reference signal currently selected is the same as the second reference signal selected in a previous random access, the transceiving unit is configured to:
receive configuration information sent by a network device, wherein the configuration information includes:
a correspondence between preambles and reference signals, and a correspondence between random access time-frequency resources and the reference signals.

Optionally, in some embodiments of the application, the reference signal is a synchronization signal block SSB, or the reference signal is a channel state information reference signal CSI-RS.

Optionally, in some embodiments of the application, the first reference signal is a first SSB, and the second reference signal is a second SSB.

Optionally, in some embodiments of the application, the determining unit 310 is specifically configured to:
determine, upon determining that an index of the first SSB is the same as an index of the second SSB, that the first reference signal is the same as the second reference signal.

Optionally, in some embodiments of the application, the first reference signal is a first CSI-RS, and the second reference signal is a second CSI-RS.

Optionally, in some embodiments of the application, the determining unit 310 is specifically configured to:
determine, upon determining that an index of the first CSI-RS is the same as an index of the second CSI-RS, that the first reference signal is the same as the second reference signal.

Optionally, in some embodiments of the application, the determining unit 310 is specifically configured to:
determine, upon determining that an index of the first CSI-RS is different from an index of the second CSI-RS and that an index of reference signal indicated by indication information in quasi-co-located QCL information of the first CSI-RS is the same as an index of reference signal indicated by indication information in quasi-co-located QCL information of the second CSI-RS, that the first reference signal is the same as the second reference signal.

Optionally, in some embodiments of the application, the first reference signal is a third SSB, and the second reference signal is a third CSI-RS.

Optionally, in some embodiments of the application, the determining unit 310 is specifically configured to:
determine, upon determining that an index of the third SSB is different from an index of the second CSI-RS and that the index of the third SSB is the same as an index of reference signal indicated by indication information in quasi-co-location QCL information of the third CSI-RS, that the first reference signal is the same as the second reference signal.

Optionally, in some embodiments of the application, the first reference signal is a fourth CSI-RS, and the second reference signal is a fourth SSB.

Optionally, in some embodiments of the application, the determining unit 310 is specifically configured to:
determine, upon determining that an index of the fourth SSB is different from an index of the second CSI-RS and that the fourth SSB is the same as an index of reference signal indicated by indication information in quasi-co-location QCL information of the fourth CSI-RS, that the first reference signal is the same as the second reference signal.

It should be understood that the device embodiments and the method embodiments may correspond to each other, and similar descriptions may refer to the method embodiments. Specifically, the terminal device 300 shown in FIG. 5 may correspond to a corresponding executor for performing the method 200 in the embodiments of the application, and the foregoing and other operations and/or functions of each unit in the terminal device 300 are respectively configured to implement corresponding processes in the method shown in FIG. 4, which will not repeated here for the sake of brevity.

The terminal device in the embodiments of the application has been described above with reference to FIG. 5 from the perspective of a functional module. It should be understood that the functional module may be implemented by hardware, or by instructions in software, or by a combination of hardware and software modules.

Specifically, each step of the method in the embodiments of the application may be completed by hardware integrated logic circuits and/or software instructions in the processor, and steps of the method disclosed in the embodiments of the application may be directly embodied as execution of a hardware decoding processor, or as execution of a combination of hardware and software modules in the decoding processor.

Optionally, the software module may be located in a well-known storage medium in the field such as a random access memory, a flash memory, a read-only memory, a programmable read-only memory, an electrically erasable programmable memory, a register, and the like. The storage medium is located in a memory, and the processor reads the information in the memory and completes the steps in the foregoing method embodiment in combination with its hardware.

For example, in some embodiments of the application, the determining unit 310 shown in FIG. 5 may be implemented by a processor.

As another example, in some embodiments of the application, the controlling unit 320 shown in FIG. 5 may be implemented by a processor.

FIG. 6 is a block diagram of a terminal device 400 according to an embodiment of the application.

The terminal device 400 shown in FIG. 6 includes a processor 410, which can call and run a computer program from a memory to implement the method according to the embodiments of the application.

Optionally, as shown in FIG. 6, the terminal device 400 may further include a memory 420, which may be configured to store indication information, and codes or instructions executable by the processor 410. The processor 410 may call and run the computer program from the memory 420 to implement the method according to the embodiments of the application.

The memory 420 may be a separate device independent of the processor 410, or may be integrated in the processor 410.

Optionally, as shown in FIG. 6, the terminal device 400 may further include a transceiver 430, and the processor 410 may control the transceiver 430 to communicate with other devices. Specifically, it may send information or data to other devices, or receive other information, data sent by the device.

The transceiver 430 may include a transmitter and a receiver. The transceiver 430 may further include antennas, and the number of antennas may be one or more.

It should be understood that the terminal device 400 may implement the corresponding processes implemented by the terminal device in each method in the embodiments of the application. In other words, the terminal device 400 in the embodiments of the application may correspond to the terminal device 300 in the embodiments of the application and correspond to an executor of the method 200 according to the embodiments of the application. For brevity, details are not repeated herein.

It should be understood that various components in the terminal device 400 are connected through a bus system. The bus system includes a power bus, a control bus, and a status signal bus in addition to a data bus.

In addition, a chip is provided in the embodiments of the application. The chip may be an integrated circuit chip with signal processing capabilities, and can implement or execute the methods, steps, and logic block diagrams disclosed in the embodiments of the application.

Optionally, the chip can be applied to various terminal devices, so that the terminal device installed with the chip can execute the methods, steps, and logic block diagrams disclosed in the embodiments of the application.

FIG. 7 is a block diagram illustrating a chip according to an embodiment of the application.

The chip 500 shown in FIG. 7 includes a processor 510, which can call and run a computer program from a memory to implement the method according to the embodiments of the application.

Optionally, as shown in FIG. 7, the chip 500 may further include a memory 520. The processor 510 may call and run the computer program from the memory 520 to implement the method according to the embodiments of the application. The memory 520 may be configured to store indication information, and codes or instructions executable by the processor 510.

The memory 520 may be a separate device independent of the processor 510, or may be integrated in the processor 510.

Optionally, the chip 500 may further include an input interface 530. The processor 510 may control the input interface 530 to communicate with other devices or chips. Specifically, the processor 510 may acquire information or data sent by other devices or chips.

Optionally, the chip 500 may further include an output interface 540. The processor 510 may control the output interface 540 to communicate with other devices or chips. Specifically, the processor 510 may output information or data to the other devices or chips.

Optionally, the chip can be applied to the network device according to the embodiments of the application, and the chip can implement the corresponding process implemented by the network device in the method according to the embodiments of the application. For brevity, details are not described herein.

Optionally, the chip can be applied to the terminal device according to the embodiments of the application, and the chip can implement the corresponding process implemented by the terminal device in the method according to the embodiments of the application. For brevity, details are not described herein.

It should be understood that the chip mentioned in some embodiments of the application may also be referred to as a system-level chip, a system chip, a chip system or a system-on-chip. It should also be understood that various components in the chip 500 are connected through a bus system, where the bus system includes a power bus, a control bus, and a status signal bus in addition to a data bus.

The processor mentioned in the embodiments of the application may be a general-purpose processor, a digital signal processor (DSP), an application specific integrated circuit (ASIC), and a field programmable gate array (FPGA) or other programmable logic devices, transistor logic devices, discrete hardware components, and the like. In addition, the general-purpose processor may be a microprocessor and the processor may be any conventional processor or the like.

In addition, the memory mentioned in some embodiments of the application may be a volatile memory or a non-volatile memory, or may include both volatile and non-volatile memory. In some embodiments, the non-volatile memory may be read-only memory (ROM), programmable read-only memory (PROM), erasable programmable read-only memory (erasable PROM, EPROM), electrical memory erasable programmable read-only memory (EPROM, EEPROM) or flash memory. The volatile memory may be a random access memory (RAM), which is used as an external cache.

By way of exemplary but not restrictive illustration, many forms of RAM are available, for example, static random access memory (static RAM, SRAM), a dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synch link dynamic random access memory (synch link DRAM, SLDRAM), and direct Rambus random access memory (direct Rambus RAM, DR RAM) and so on.

Embodiments of the disclosure further provide a computer readable storage medium, which is configured to store a computer program.

Optionally, the computer readable storage medium may be applied to the network device in some embodiments of the application, and the computer program causes the computer to execute the corresponding process implemented by the network device in each method in some embodiments of the application. For the sake of brevity, details will not be repeated here.

Optionally, the computer readable storage medium may be applied to the mobile terminal/terminal device in some embodiments of the application, and the computer program causes the computer to execute the corresponding process implemented by the mobile terminal/terminal device in each method in some embodiments of the application. For the sake of brevity, details will not be repeated here.

A computer program product is also provided in some embodiments of the application, including computer program instructions.

Optionally, the computer program product can be applied to the network device in some embodiments of the application, and the computer program instruction causes the computer to execute a corresponding process implemented by the network device in each method in some embodiments of the application. For the sake of brevity, details will not be repeated here.

Optionally, the computer program product can be applied to the mobile terminal/terminal device in some embodiments of the application, and the computer program instruction causes the computer to execute a corresponding process implemented by the mobile terminal/terminal device in each method in some embodiments of the application. For the sake of brevity, details will not be repeated here.

A computer program is also provided in some embodiments of the application.

Optionally, the computer program may be applied to the network device in some embodiments of the application. When the computer program is run on a computer, the computer is caused to execute a corresponding process implemented by the network device in each method in some embodiments of the application. For the sake of brevity, details will not be repeated here.

Embodiments of the application further provides a communication system. The communication system includes a terminal device 300 as shown in FIG. 5 or a terminal device 400 as shown in FIG. 6. The communication system may further include a network device, which may be a conventional network device.

The terminal device 810 may be configured to implement the corresponding functions implemented by the terminal device in the foregoing method 200, and a composition of the terminal device may be as shown in the terminal device 300 in FIG. 5 or as shown in the terminal device 400 in FIG. 6. For the sake of brevity, details will not be repeated here.

It should be noted that the terms "system" and the like in this disclosure may also be referred to as "network management architecture" or "network system" and the like.

It should also be understood that the terminology used in the embodiments of the application and the appended claims is for the purpose of describing particular embodiments only and is not intended to limit the embodiments of the application.

For example, the singular forms "a", "the", "the above", and "said" used in the embodiments of the application and the appended claims are also intended to include the plural forms unless the context clearly indicates otherwise meaning.

Those of ordinary skill in the art may realize that the units and algorithm steps of each example described in connection with the embodiments disclosed herein can be implemented by electronic hardware, or a combination of computer software and electronic hardware. Whether these functions are performed in hardware or software depends on the specific application and design constraints of the technical solution. Those of ordinary skill in the art can use different methods to implement the described functions for each specific application, but such implementation should not be considered to be beyond the scope of this application.

If the functions are implemented in the form of software functional units and sold or used as an independent product, they can be stored in a computer-readable storage medium. Based on this understanding, an essential part of the technical solution of this application or, in other words, a part thereof that contributes to existing technology, or other parts of the technical solution can be embodied in the form of a software product. The computer software product is stored in a storage medium, including several instructions used for causing a computer device (which may be a personal computer, a server, or a network device, and the like) to perform all or part of the steps of the method described in some embodiments of the application. The foregoing storage medium includes various medium that can store program codes, such as a U disk, a mobile hard disk, a ROM, a RAM, a magnetic disk, or an optical disk.

Those skilled in the art can clearly understand that, for the convenience and brevity of description, the specific working processes of the systems, devices, and units described above can refer to the corresponding processes in the foregoing method embodiments, and are not repeated here.

In the several embodiments provided in this application, it should be understood that the disclosed systems, devices, and methods may be implemented in other ways.

For example, the division of units or modules or components in the device embodiments described above is only a logical function division. In actual implementation, there may be another division manner. For example, multiple units or modules or components may be combined or integrated into another system, or some units or modules or components can be ignored or not implemented.

As another example, the above-mentioned units/modules/components described display as separate components may be or may not be physically separated, that is, they may be located in one place, or may be distributed on multiple network units. Some or all of the units/modules/components can be selected according to actual needs to achieve the objectives of the embodiments of the application.

Finally, it should be noted that the mutual coupling or direct coupling or communication connection shown or discussed above may be indirect coupling or communication connection through some interfaces, devices or units, which may be electrical, mechanical or in other forms.

The above content is only a specific implementation of the embodiments of the application, the protection scope of the embodiments of the application is not limited thereto. Any person skilled in the art can easily think of the technical scope disclosed in the embodiments of the application. Therefore, the protection scope of the embodiments of the present application shall be subject to the protection scope of the claims.

## Claims

1. A method for controlling a power ramping counter, comprising:
determining (210), by a terminal device upon re-initiating a random access, whether a first reference signal currently selected is the same as a second reference signal selected in a previous random access; and
incrementing (220), by the terminal device upon determining that the first reference signal is the same as the second reference signal, the power ramping counter by one;
keeping (230), by the terminal device upon determining that the first reference signal is different from the second reference signal, the power ramping counter unchanged;
**characterized in that**,
when the first reference signal is a first channel state information reference signal CSI-RS, and the second reference signal is a second CSI-RS, the determining (200) whether the first reference signal currently selected is the same as the second reference signal selected in the previous random access comprises:
determining, upon determining that an index of the first CSI-RS is different from an index of the second CSI-RS and that an index of reference signal indicated by indication information in quasi-co-located QCL information of the first CSI-RS is the same as an index of reference signal indicated by indication information in quasi-co-located QCL information of the second CSI-RS, that the first reference signal is the same as the second reference signal; or,
when the first reference signal is a third synchronization signal block SSB, and the second reference signal is a third CSI-RS, the determining (200) whether the first reference signal currently selected is the same as the second reference signal selected in the previous random access comprises:
determining, upon determining that an index of the third SSB is different from an index of the third CSI-RS and that the index of the third SSB is the same as an index of reference signal indicated by indication information in quasi-co-location QCL information of the third CSI-RS, that the first reference signal is the same as the second reference signal; or,
when the first reference signal is a fourth CSI-RS, and the second reference signal is a fourth SSB, the determining (200) whether the first reference signal currently selected is the same as the second reference signal selected in the previous random access comprises:
determining, upon determining that an index of the fourth SSB is different from an index of the fourth CSI-RS and that the index of the fourth SSB is the same as an index of reference signal indicated by indication information in quasi-co-location QCL information of the fourth CSI-RS, that the first reference signal is the same as the second reference signal.

2. The method according to claim 1, wherein before the determining (200) whether the first reference signal currently selected is the same as the second reference signal selected in the previous random access, the method further comprises:
receiving, by the terminal device, configuration information sent by a network device, wherein the configuration information includes:
a correspondence between preambles and reference signals, and a correspondence between random access time-frequency resources and the reference signals.

3. The method according to claim 1, wherein the first reference signal is a first SSB, and the second reference signal is a second SSB.

4. The method according to claim 3, wherein the determining (200) whether the first reference signal currently selected is the same as the second reference signal selected in the previous random access comprises:
determining, by the terminal device upon determining that an index of the first SSB is the same as an index of the second SSB, that the first reference signal is the same as the second reference signal.

5. The method according to claim 1, wherein when the first reference signal is the first CSI-RS, and the second reference signal is the second CSI-RS, the determining (200) whether the first reference signal currently selected is the same as the second reference signal selected in the previous random access further comprises:
determining, by the terminal device upon determining that an index of the first CSI-RS is the same as an index of the second CSI-RS, that the first reference signal is the same as the second reference signal.

6. A terminal device (300), comprising:
a determining unit (310), configured to determine, upon re-initiating a random access, whether a first reference signal currently selected is the same as a second reference signal selected in a previous random access; and
a controlling unit (320), configured to:
increment, upon determining that the first reference signal is the same as the second reference signal, the power ramping counter by one;
keep, upon determining that the first reference signal is different from the second reference signal, the power ramping counter unchanged;
**characterized in that**,
when the first reference signal is a first channel state information reference signal CSI-RS, and the second reference signal is a second CSI-RS, the determining unit (310) is specifically configured to:
determine, upon determining that an index of the first CSI-RS is different from an index of the second CSI-RS and that an index of reference signal indicated by indication information in quasi-co-located QCL information of the first CSI-RS is the same as an index of reference signal indicated by indication information in quasi-co-located QCL information of the second CSI-RS, that the first reference signal is the same as the second reference signal; or
when the first reference signal is a third synchronization signal block SSB, and the second reference signal is a third CSI-RS, the determining unit (310) is specifically configured to:
determine, upon determining that an index of the third SSB is different from an index of the third CSI-RS and that the index of the third SSB is the same as an index of reference signal indicated by indication information in quasi-co-location QCL information of the third CSI-RS, that the first reference signal is the same as the second reference signal; or
when the first reference signal is a fourth CSI-RS, and the second reference signal is a fourth SSB, the determining unit (310) is specifically configured to:
determine, upon determining that an index of the fourth SSB is different from an index of the fourth CSI-RS and that the index of the fourth SSB is the same as an index of reference signal indicated by indication information in quasi-co-location QCL information of the fourth CSI-RS, that the first reference signal is the same as the second reference signal.

7. The terminal device (300) according to claim 6, further comprising:
a transceiving unit, wherein before the determining unit determines whether the first reference signal currently selected is the same as the second reference signal selected in a previous random access, the transceiving unit is configured to:
receive configuration information sent by a network device, wherein the configuration information includes:
a correspondence between preambles and reference signals, and a correspondence between random access time-frequency resources and the reference signals.

## Patentansprüche

1. Verfahren zum Steuern eines Leistungsanpassungszählers, das Folgendes umfasst:
Bestimmen (210) durch eine Endgerätevorrichtung nach erneutem Initiieren eines Direktzugriffs, ob ein erstes Referenzsignal, das derzeit ausgewählt ist, dasselbe ist wie ein zweites Referenzsignal, das bei einem vorherigen Direktzugriff ausgewählt war; und
Inkrementieren (220) des Leistungsanpassungszählers um eins durch die Endgerätevorrichtung nach Bestimmen, dass das erste Referenzsignal dasselbe ist wie das zweite Referenzsignal;
Beibehalten (230) des unveränderten Leistungsanpassungszählers durch die Endgerätevorrichtung nach Bestimmen, dass sich das erste Referenzsignal vom zweiten Referenzsignal unterscheidet;
**dadurch gekennzeichnet, dass**,
wenn das erste Referenzsignal ein erstes Kanalzustandsinformationsreferenzsignal, CSI-RS, und das zweite Referenzsignal ein zweites CSI-RS ist, das Bestimmen (200), ob das erste Referenzsignal, das derzeit ausgewählt ist, dasselbe ist wie das zweite Referenzsignal, das beim vorherigen Direktzugriff ausgewählt war, Folgendes umfasst:
Bestimmen, dass das erste Referenzsignal dasselbe ist wie das zweite Referenzsignal, nach Bestimmen, dass sich ein Index des ersten CSI-RS von einem Index des zweiten CSI-RS unterscheidet und dass ein Index eines Referenzsignals, der von Anzeigeinformationen in Quasikolokations(QCL)-Informationen des ersten CSI-RS angezeigt wird, derselbe ist wie ein Index eines Referenzsignals, der von Anzeigeinformationen in Quasikolokations(QCL)-Informationen des zweiten CSI-RS angezeigt wird; oder,
wenn das erste Referenzsignal ein dritter Synchronisationssignalblock, SSB, und das zweite Referenzsignal ein drittes CSI-RS ist, das Bestimmen (200), ob das erste Referenzsignal, das derzeit ausgewählt ist, dasselbe ist wie das zweite Referenzsignal, das beim vorherigen Direktzugriff ausgewählt war, Folgendes umfasst:
Bestimmen, dass das erste Referenzsignal dasselbe ist wie das zweite Referenzsignal, nach Bestimmen, dass sich ein Index des dritten SSB von einem Index des dritten CSI-RS unterscheidet und dass der Index des dritten SSB derselbe ist wie ein Index eines Referenzsignals, der von Anzeigeinformationen in Quasikolokations(QCL)-Informationen des dritten CSI-RS angezeigt wird; oder,
wenn das erste Referenzsignal ein viertes CSI-RS und das zweite Referenzsignal ein vierter SSB ist, das Bestimmen (200), ob das erste Referenzsignal, das derzeit ausgewählt ist, dasselbe ist wie das zweite Referenzsignal, das beim vorherigen Direktzugriff ausgewählt war, Folgendes umfasst:
Bestimmen, dass das erste Referenzsignal dasselbe ist wie das zweite Referenzsignal, nach Bestimmen, dass sich ein Index des vierten SSB von einem Index des vierten CSI-RS unterscheidet und dass der Index des vierten SSB derselbe ist wie ein Index eines Referenzsignals, der von Anzeigeinformationen in Quasikolokations(QCL)-Informationen des vierten CSI-RS angezeigt wird.

2. Verfahren nach Anspruch 1, wobei das Verfahren vor dem Bestimmen (200), ob das erste Referenzsignal, das derzeit ausgewählt ist, dasselbe ist wie das zweite Referenzsignal, das beim vorherigen Direktzugriff ausgewählt war, ferner Folgendes umfasst:
Empfangen von Auslegungsinformationen, die von einer Netzwerkvorrichtung gesendet werden, durch die Endgerätevorrichtung, wobei die Auslegungsinformationen Folgendes beinhalten:
eine Entsprechung zwischen Präambeln und Referenzsignalen und eine Entsprechung zwischen Direktzugriffszeitfrequenzressourcen und den Referenzsignalen.

3. Verfahren nach Anspruch 1, wobei das erste Referenzsignal ein erster SSB und das zweite Referenzsignal ein zweiter SSB ist.

4. Verfahren nach Anspruch 3, wobei das Bestimmen (200), ob das erste Referenzsignal, das derzeit ausgewählt ist, dasselbe ist wie das zweite Referenzsignal, das beim vorherigen Direktzugriff ausgewählt war, Folgendes umfasst:
Bestimmen durch die Endgerätevorrichtung, dass das erste Referenzsignal dasselbe ist wie das zweite Referenzsignal, nach Bestimmen, dass ein Index des ersten SSB derselbe ist wie ein Index des zweiten SSB.

5. Verfahren nach Anspruch 1, wobei, wenn das erste Referenzsignal das erste CSI-RS und das zweite Referenzsignal das zweite CSI-RS ist, das Bestimmen (200), ob das erste Referenzsignal, das derzeit ausgewählt ist, dasselbe ist wie das zweite Referenzsignal, das beim vorherigen Direktzugriff ausgewählt war, ferner Folgendes umfasst:
Bestimmen durch die Endgerätevorrichtung, dass das erste Referenzsignal dasselbe ist wie das zweite Referenzsignal, nach Bestimmen, dass ein Index des ersten CSI-RS derselbe ist wie ein Index des zweiten CSI-RS.

6. Endgerätevorrichtung (300), die Folgendes umfasst:
eine Bestimmungseinheit (310), die dazu ausgelegt ist, nach erneutem Initiieren eines Direktzugriffs zu bestimmen, ob ein erstes Referenzsignal, das derzeit ausgewählt ist, dasselbe ist wie ein zweites Referenzsignal, das bei einem vorherigen Direktzugriff ausgewählt war; und
eine Steuereinheit (320), die zu Folgendem ausgelegt ist:
Inkrementieren des Leistungsanpassungszählers um eins nach Bestimmen, dass das erste Referenzsignal dasselbe ist wie das zweite Referenzsignal;
Beibehalten des unveränderten Leistungsanpassungszählers nach Bestimmen, dass sich das erste Referenzsignal vom zweiten Referenzsignal unterscheidet;
**dadurch gekennzeichnet, dass**,
wenn das erste Referenzsignal ein erstes Kanalzustandsinformationsreferenzsignal, CSI-RS, und das zweite Referenzsignal ein zweites CSI-RS ist, die Bestimmungseinheit (310) speziell zu Folgendem ausgelegt ist:
Bestimmen, dass das erste Referenzsignal dasselbe ist wie das zweite Referenzsignal, nach Bestimmen, dass sich ein Index des ersten CSI-RS von einem Index des zweiten CSI-RS unterscheidet und dass ein Index eines Referenzsignals,
der von Anzeigeinformationen in Quasikolokations(QCL)-Informationen des ersten CSI-RS angezeigt wird, derselbe ist wie ein Index eines Referenzsignals, der von Anzeigeinformationen in Quasikolokations(QCL)-Informationen des zweiten CSI-RS angezeigt wird; oder
wenn das erste Referenzsignal ein dritter Synchronisationssignalblock, SSB, und das zweite Referenzsignal ein drittes CSI-RS ist, die Bestimmungseinheit (310) speziell zu Folgendem ausgelegt ist:
Bestimmen, dass das erste Referenzsignal dasselbe ist wie das zweite Referenzsignal, nach Bestimmen, dass sich ein Index des dritten SSB von einem Index des dritten CSI-RS unterscheidet und dass der Index des dritten SSB derselbe ist wie ein Index eines Referenzsignals, der von Anzeigeinformationen in Quasikolokations(QCL)-Informationen des dritten CSI-RS angezeigt wird; oder
wenn das erste Referenzsignal ein viertes CSI-RS und das zweite Referenzsignal ein vierter SSB ist, die Bestimmungseinheit (310) speziell zu Folgendem ausgelegt ist:
Bestimmen, dass das erste Referenzsignal dasselbe ist wie das zweite Referenzsignal, nach Bestimmen, dass sich ein Index des vierten SSB von einem Index des vierten CSI-RS unterscheidet und dass der Index des vierten SSB derselbe ist wie ein Index eines Referenzsignals, der von Anzeigeinformationen in Quasikolokations(QCL)-Informationen des vierten CSI-RS angezeigt wird.

7. Endgerätevorrichtung (300) nach Anspruch 6, die ferner Folgendes umfasst:
eine Sendeempfangseinheit, wobei die Sendeempfangseinheit vor dem Bestimmen durch die Bestimmungseinheit, ob das erste Referenzsignal, das derzeit ausgewählt ist, dasselbe ist wie das zweite Referenzsignal, das bei einem vorherigen Direktzugriff ausgewählt war, ferner zu Folgendem ausgelegt ist:
Empfangen von Auslegungsinformationen, die von einer Netzwerkvorrichtung gesendet werden, wobei die Auslegungsinformationen Folgendes umfassen:
eine Entsprechung zwischen Präambeln und Referenzsignalen und eine Entsprechung zwischen Direktzugriffszeitfrequenzressourcen und den Referenzsignalen.

## Revendications

1. Procédé de commande d'un compteur de rampe de puissance, comprenant :
la détermination (210), par un dispositif terminal lors d'une réinitialisation d'un accès aléatoire, qu'un premier signal de référence actuellement sélectionné est identique ou non à un deuxième signal de référence sélectionné lors d'un accès aléatoire précédent ; et
l'incrémentation (220), par le dispositif terminal à la détermination que le premier signal de référence est identique au deuxième signal de référence, du compteur de rampe de puissance de un ;
le maintien (230), par le dispositif terminal, à la détermination que le premier signal de référence est différent du deuxième signal de référence, du compteur de rampe de puissance inchangé ;
**caractérisé en ce que**,
lorsque le premier signal de référence est un premier signal de référence d'informations d'état de canal CSI-RS et que le deuxième signal de référence est un deuxième CSI-RS, la détermination (200) que le premier signal de référence actuellement sélectionné est identique ou non au deuxième signal de référence sélectionné lors de l'accès aléatoire précédent comprend :
la détermination, à la détermination qu'un indice du premier CSI-RS est différent d'un indice du deuxième CSI-RS et qu'un indice de signal de référence indiqué par des informations d'indication dans des informations quasi-co-situées QCL du premier CSI-RS est identique à un indice de signal de référence indiqué par des informations d'indication dans des informations quasi-co-situées QCL du deuxième CSI-RS, que le premier signal de référence est identique au deuxième signal de référence ; ou
lorsque le premier signal de référence est un troisième bloc de signal de synchronisation SSB et que le deuxième signal de référence est un troisième CSI-RS, la détermination (200) que le premier signal de référence actuellement sélectionné est identique ou non au deuxième signal de référence sélectionné lors de l'accès aléatoire précédent comprend :
la détermination, à la détermination qu'un indice du troisième SSB est différent d'un indice du troisième CSI-RS et que l'indice du troisième SSB est identique à un indice de signal de référence indiqué par des informations d'indication dans les informations quasi-co-situées QCL du troisième CSI-RS, que le premier signal de référence est identique au deuxième signal de référence ; ou
lorsque le premier signal de référence est un quatrième CSI-RS et que le deuxième signal de référence est un quatrième SSB, la détermination (200) que le premier signal de référence actuellement sélectionné est identique ou non au deuxième signal de référence sélectionné lors de l'accès aléatoire précédent comprend :
la détermination, à la détermination qu'un indice du quatrième SSB est différent d'un indice du quatrième CSI-RS et que l'indice du quatrième SSB est identique à un indice de signal de référence indiqué par des informations d'indication dans les informations quasi-co-situées QCL du quatrième CSI-RS, que le premier signal de référence est identique au deuxième signal de référence.

2. Procédé selon la revendication 1, le procédé comprenant en outre, avant la détermination (200) que le premier signal de référence actuellement sélectionné est identique ou non au deuxième signal de référence sélectionné lors de l'accès aléatoire précédent :
la réception, par le dispositif terminal, d'informations de configuration envoyées par un dispositif réseau, les informations de configuration comprenant :
une correspondance entre des préambules et des signaux de référence, et une correspondance entre des ressources temps-fréquence d'accès aléatoire et les signaux de référence.

3. Procédé selon la revendication 1, dans lequel le premier signal de référence est un premier SSB, et le deuxième signal de référence est un deuxième SSB.

4. Procédé selon la revendication 3, dans lequel la détermination (200) que le premier signal de référence actuellement sélectionné est identique ou non au deuxième signal de référence sélectionné lors de l'accès aléatoire précédent comprend :
la détermination, par le dispositif terminal à la détermination qu'un indice du premier SSB est identique à un indice du deuxième SSB, que le premier signal de référence est identique au deuxième signal de référence.

5. Procédé selon la revendication 1, dans lequel lorsque le premier signal de référence est le premier CSI-RS, et le deuxième signal de référence est le deuxième CSI-RS, la détermination (200) que le premier signal de référence actuellement sélectionné est identique ou non au deuxième signal de référence sélectionné lors de l'accès aléatoire précédent comprend en outre :
la détermination, par le dispositif terminal à la détermination qu'un indice du premier CSI-RS est identique à un indice du deuxième CSI-RS, que le premier signal de référence est identique au deuxième signal de référence.

6. Dispositif terminal (300), comprenant :
une unité de détermination (310), configurée pour déterminer, lors d'une réinitialisation d'un accès aléatoire, qu'un premier signal de référence actuellement sélectionné est identique ou non à un deuxième signal de référence sélectionné lors d'un accès aléatoire précédent ; et
une unité de commande (320), configurée pour :
incrémenter, à la détermination que le premier signal de référence est identique au deuxième signal de référence, le compteur de rampe de puissance de un ;
maintenir, à la détermination que le premier signal de référence est différent du deuxième signal de référence, le compteur de rampe de puissance inchangé ;
**caractérisé en ce que**,
lorsque le premier signal de référence est un premier signal de référence d'informations d'état de canal CSI-RS et que le deuxième signal de référence est un deuxième CSI-RS, l'unité de détermination (310) est spécifiquement configurée pour :
déterminer, à la détermination qu'un indice du premier CSI-RS est différent d'un indice du deuxième CSI-RS et qu'un indice de signal de référence indiqué par des informations d'indication dans des informations quasi-co-situées QCL du premier CSI-RS est identique à un indice de signal de référence indiqué par des informations d'indication dans des information quasi-co-situées QCL du deuxième CSI-RS, que le premier signal de référence est identique au deuxième signal de référence ; ou
lorsque le premier signal de référence est un troisième bloc de signal de synchronisation SSB et que le deuxième signal de référence est un troisième CSI-RS, l'unité de détermination (310) est spécifiquement configurée pour :
déterminer, à la détermination qu'un indice du troisième SSB est différent d'un indice du troisième CSI-RS et que l'indice du troisième SSB est identique à un indice de signal de référence indiqué par des informations d'indication dans des informations quasi-co-situées QCL du troisième CSI-RS, que le premier signal de référence est identique au deuxième signal de référence ; ou
lorsque le premier signal de référence est un quatrième CSI-RS et que le deuxième signal de référence est un quatrième SSB, l'unité de détermination (310) est spécifiquement configurée pour :
déterminer, à la détermination qu'un indice du quatrième SSB est différent d'un indice du quatrième CSI-RS et que l'indice du quatrième SSB est identique à un indice de signal de référence indiqué par des informations d'indication dans des informations quasi-co-situées QCL du quatrième CSI-RS, que le premier signal de référence est identique au deuxième signal de référence.

7. Dispositif terminal (300) selon la revendication 6, comprenant en outre :
une unité d'émission-réception, dans lequel, avant que l'unité de détermination détermine que le premier signal de référence actuellement sélectionné est identique ou non au deuxième signal de référence sélectionné lors d'un accès aléatoire précédent, l'unité d'émission-réception est configurée pour :
recevoir des informations de configuration envoyées par un dispositif réseau, les informations de configuration comportant :
une correspondance entre des préambules et des signaux de référence, et une correspondance entre des ressources temps-fréquence d'accès aléatoire et les signaux de référence.
